# EUROPEAN PATENT SPECIFICATION

(11) **EP 1 301 886 B1**
(45) Date of publication and mention of the grant of the patent: **29.09.2004**
(21) Application number: 01951724.2
(22) Date of filing: 21.06.2001
(51) Int. Cl.: G06F 17/60, H04L 29/06

(54) **PROCEDURE AND SYSTEM FOR TRANSMISSION OF DATA**
PROZEDUR UND SYSTEM ZUR ÜBERTRAGUNG VON DATEN
PROCEDE ET SYSTEME DE TRANSMISSION DE DONNEES

(30) Priority: 21.06.2000 FI 20001488
(43) Date of publication of application: 16.04.2003
(73) Proprietor: TeliaSonera Finland Oyj, 00510 Helsinki (FI)
(72) Inventor: VATANEN, Harri, Sunningdale, Berkshire SL5 9PS (GB)
(74) Representative: Simmelvuo, Markku
(86) International application number: PCT/FI2001/000596
(87) International publication number: WO 2002/001431

(56) References cited:
- WO-A1-00/02358
- WO-A1-00/39958
- WO-A1-98/17029
- WO-A2-99/07108
- US-A- 6 102 287
- US-B1- 6 237 093

## Description

### TECHNICAL FIELD

The presented invention is concerned with telecommunications. Especially, the invention targets on a new kind of method and system for the transfer and routing of data. The invention also targets on indicating the service requester as well as the parties involved with the service on the telecommunications system.

### BACKGROUND ART

There are many different kinds of mobile terminals. As technology develops, the features and service supply of wireless terminals also develop. When a wireless connection is set up from a mobile terminal to a server, payment terminal or to any corresponding device or system, the possibilities of exploiting the wireless terminal will grow. Furthermore, when the wireless connection is set up securely and when the wireless terminal user can be locally authenticated in a trustworthy way, whole new application areas will emerge. It can securely be used for subscribing products and services, paying for them and for verifying identity and so forth.

A group of world leading data communications- and information technology companies, have developed a technique, which can enable a wireless connection between a mobile phone and for example a portable computer. A corresponding connection could be formed between any two devices of which the one can be a mobile terminal. The developed technique has been named "Bluetooth" and is based on short range radio technology which makes it possible to connect various kinds of terminal devices to each other. A more specific description of the technique is displayed on the WWW-site www.bluetooth.com, for instance in the version which is dated 1999-2000 and which is valid during the making of the application.

Bluetooth technology enables the connection of devices to each other with a short-range radio link. With the help of Bluetooth technology you can for instance connect a mobile station or another terminal device and a portable computer to each other without troublesome wiring. Printers, workstations, faxes, keyboards and virtually any digital devices can be part of the Bluetooth system or network. This technology forms a universal bridge to the existing data networks and accessories, and offers a possibility for small private groups to be formed with the help of devices linked to each other without a fixed network infrastructure. In addition, encryption and authentication can be used between the devices, for instance in such a way that only a certain user's mobile phone or other portable terminal can be used in connection with a certain portable computer or other workstation. Through Bluetooth it is possible for the mobile communicator or the wireless terminal to control almost any target.

It is known that you can perform different kinds of purchase and guidance transactions using a mobile communicator. A purchase transaction can for instance be a choice of product and paying for it through a mobile communicator from various automated devices. The growth of provided services concerned with mobile communicators brings with it a new area. The information to be sent is often such that it would be wanted to stay between the sender and the receiver. It must be possible to secure the information for instance with various encryption methods.

Often the place where the information of the purchase or guidance transaction has to be placed is not in the vicinity of the place of transaction. A problem is the transferring of the data concerning the transaction as easily and securely as possible into the central system. In addition, the recipient of the sent data has to be able to verify the absolute authenticity of the data as well as the authenticity of the sender.

At present, a problem is also how the information to be sent is sent in the correct form or how the receiving terminal can identify the data and can process it correctly. Furthermore, a problem is carrying out the data transmission concerning the transaction and its routing securely between the different parties involved with the transaction.

The MIME (Multipurpose Internet Mail Extensions) type tells the terminal or browser the type of file or message obtained from the server. The server attaches the files to the MIME-type headline data, which is sent before the actual document is sent. In one application, the server determines the MIME-type from the file's terminal, which it compares to the MIME-type chart. With the help of the MIME-type, the browser tries to determine a program with which the file in question can be opened. For instance, if the files type is text/html, the browser knows it can open the file by itself, but if the file type is for instance application/zip, the browser has to open some other program which allows handling of the file. In some cases it is asked if you want to open the file or store it on the local machine's hard drive. If the type of the file is not recognised, it will be attempted to be saved to the hard drive of the local computer.

FI-A-982714 discloses a method for sending a sound or musical tune message from a service user terminal device, such as a mobile phone, to the terminal device of another subscriber in short-message format. The method is implementable by means of a mobile phone and/or a PC connected to a telecom network. According to this prior art document, the subscriber wishing to send a musical tune message selects the desired musical tune from the information displayed on his terminal device and then selects the directory number or connection code of the recipient, whereupon said message is sent to the recipient's terminal device. In conjunction with the receipt of said musical tune message at the recipient's terminal, the sender's name and/or directory number, together with a possible text message, are displayed to the recipient. Hereupon, the recipient may activate said musical tune message and hear it and, if so desired, store the same in his terminal device or, optionally, send the same to the terminal device of a third party.

### PURPOSE OF THE INVENTION

The purpose of the invention is to delete the before mentioned disadvantages or at least significantly reduce them.

Especially, the purpose of the invention is to present a new method and system with which you can with a terminal, for instance a server, mobile communicator or with some other wireless terminal, on one hand verify and on the other hand recognise the form, content and possibly the transmission protocol of the data to be sent and received. Furthermore with the help of the presented invention, the service request can be securely routed to the service provider. The presented invention solves the global data transmission from the server to the user terminal and vice versa.

### SUMMARY OF THE INVENTION

The invention is concerned with the sending of messages and the billing of messages in a telecommunications network. When a service requester requests a service, a video, music or other digital data to be sent on the network, the messages concerning the transactions of the particular service requester are labelled. They are labelled in order to ease the handling and the allocation of the billing to the right service requester. On the basis of the labels, the requests of the service requester can be directed and billed. In this application a transaction and a transaction message are defined as a subscription, service, payment transaction, account inquiry or any electronic service or transaction to be carried out through data transfer equipment.

The invention targets on a method to handle a transaction message in a telecommunications network. The telecommunications network can be a telephone network, internet network, Bluetooth network, local network or any network created by combining any of the before mentioned. In the method, a transaction request, for example a service request, is sent from the terminal to the server. The request consists of data of the requester, data of the used network component and the requester's digital signature. The server is any service provider device, which has a connection to other parts of the network, such as a server computer. The network component and the data of it are defined as the receiving terminal and its address, where the requester wants to receive the messages of the transaction to be mediated. The digital signature accomplishes non-repudiation i.e. confirmation of the requester's request.

As a response to the mentioned transaction request, a transaction message is sent to the mentioned terminal or network component from the mentioned server. Thus, the network component can also be the terminal making the request. The terminal can be a mobile phone, desktop computer, pocket computer, pocket calendar or any terminal, which can form a connection to the server.

In accordance with the invention, the mentioned message will be labelled with message-type data and requester data before it is sent. The message-type data contains at least information of the data content of the message to be sent, i.e. on that basis the receiving terminal knows how and which program to handle the received data with. The requester data is unambiguous identifier of the server or the transaction requester on the basis of which a possible billing for the transaction messages can be allocated to the right requester. Furthermore it is possible, on the basis of requester data, to bring out a reserved concrete or dynamic network-address from the routing chat to the requester, where the transaction messages will be routed.

The message is mediated to the service requester on the basis of the network-address. The network-address is advantageously an IP-address (Internet Protocol) of the internet-network or a corresponding address. The IP-address does not primarily define the receiving machine, rather it unambiguously defines the connection interface in the whole world. The data communications network can thus be the internet-network, but it is only one example of a possible realisation. The data communications network can alternatively be for instance the payment network of a bank.

Furthermore the message-type data and the requester data are extracted accordingly to the invention in the data communications network from the mentioned transaction message and are used as handling data for the transaction. In one application, the message-type data and the requester data extracted from each transaction message are saved in the billing database.

In one application the message-type data and the requester data are attached to the headline part of the transaction message. Here can be used for instance MIME-message-type (Multipurpose Internet Mail Extensions), which tells the terminal or other network components which handle the type of the mediated message or files. MIME is defined in the internet, suggestions RFC (Request for Comments, FC) 2045, 2046, 2047, 2048 and 2049. Additionally, there is a group of other suggestions which are at least partially concerned with MIME, but which are here only referred to by mentioning them.

In one application of the invention, a data link is formed between the terminal and the server. The formed data link is used to log on to the server by using the terminal user's identity. Thereafter the physical network-address of the terminal and/or a third device is announced, to which said transaction message is requested. It is also possible to obtain the terminal's network-address by means of a unique identifier obtained in connection with the log on. The data link can be a connection based on Bluetooth technology, infrared, the WAP-protocol or the connection can be formed by using HTML-protocol. The advantage of these different ways of connecting is that they are predefined for MIME-type message transfer, whereas the message type easily can be added to the messages to be sent by using MIME. In some applications, the messages between the terminal and the server can also be sent as short messages.

The WAP-protocol (Wireless Application Protocol) defines a standard for applications that offer services for the terminal devices of a wireless network. With WAP you can for instance connect to a WVVW-browser via telephone connection. Furthermore, when carrying out WAP, for instance WML-language is used (Wireless Markup Language), which is the description language of the WAP-protocol. WML is a description language modulated for a wireless environment, and which is similar to the HTML-language (Hyper Text Markup Language).

In one application of the invention, the message sent from the terminal device is encrypted with a service and/or server specific encryption key. With the encryption, the reliability, security and authenticity of the data is assured. Furthermore, a confirmation message for the received transaction message can be sent from the server to the terminal device. With this, the terminal device user gets information of the successful sending of the subscription, if the user for instance has subscribed a service to some other network component. For the encryption of the data link, the public and secret key encryption method, PKI (Public Key Infrastructure), can be used. The encryption of incoming and future messages as well as the keys concerning the messages, advantageously the handling of the public and secret keys can be carried out using a special security module. Using such a security module, the usage of encryption and authentication of messages can be added to such devices, which do not originally have this capability. One example of a security module is described in the patent publication PCT/FI99/00713.

Furthermore, the invention is concerned with a system for the handling of transaction data in a telecommunications network. The system comprises a server, which can be a computer, which conducts a certain task directed by requests from other computers or servers connected to the same network. Furthermore, the system consists of a terminal for the forming and sending of a digital signature of the transaction requester and a transaction request, which consists of data of the requester, and data of the used network component. The server has means for forming and sending a transaction message as a response to the transaction request from the terminal device.

Accordingly to the invention, an adder or a similar device furthermore belongs to the system, which labels the transaction message with message-type data and subscriber data. Furthermore accordingly to the invention, a filter or a similar device belongs to the data communications network, with which message-type data and subscriber data is extracted or filtered from the transaction message, and a handling device, which is arranged to use the extracted message-type data and subscriber data as handling data for the transaction. The adder is organised to attach the mentioned message-type data and subscriber data to the header part of the transaction message.

In one application of the invention, a collector belongs to the system for the collection of message-type data and subscriber data, and for saving them into the billing database.

In one application, means for creating a data link between the mentioned terminal and the mentioned server furthermore belongs to the system, and the terminal has registration means, with which you register to the mentioned server using the terminal user identity and announce the physical network address of the terminal and/or a third device, to which the mentioned transaction message is subscribed.

The presented invention has many advantages. Especially, an advantage of the invention is that the terminal, for instance a server, mobile communicator or some other wireless terminal on one hand verifies and on the other hand recognises the form, content and possibly the mediation protocol of the sent and received data. Furthermore, thanks to an embodiment of the present invention, billing of the services and the mediated data on the data communications network will become easier than before. The invention is defined by the appended claims.

### LIST OF DRAWINGS

In the following the invention is described in detail with embodiment examples, where
Figure 1 illustrates an advantageous system of the invention,
Figure 2 illustrates an advantageous flowchart example of the system functions accordingly to the presented invention and
Figure 3 illustrates a transaction message accordingly with the invention.

### DETAILED DESCRIPTION OF THE INVENTION

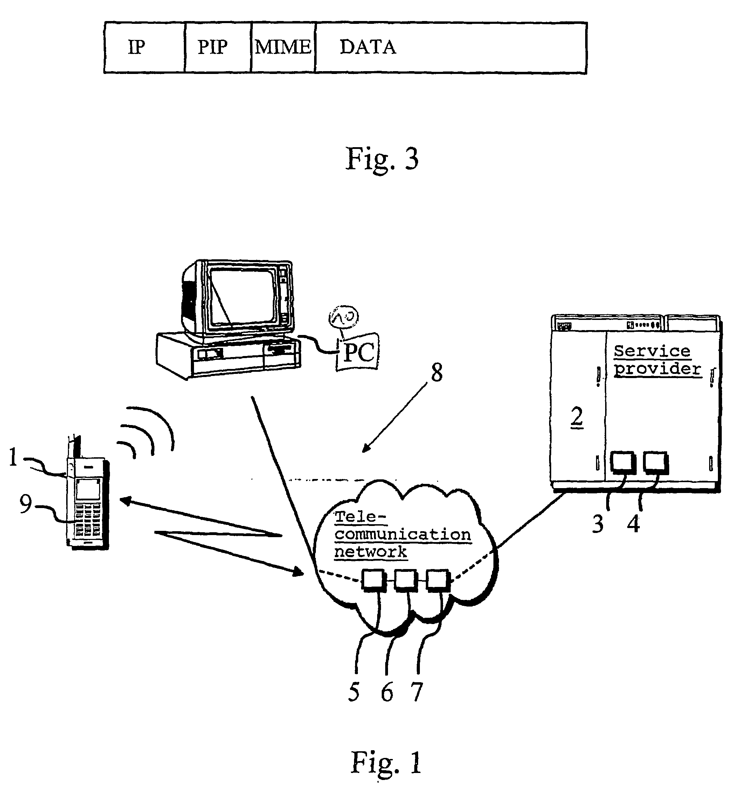

The system of figure 1 for the handling of a transaction message comprises of server 2, which is connected to a telecommunications network and through that furthermore connected to a terminal device 1. In the system the terminal device 1 is in this example a mobile phone but also any terminal device can come into question. The terminal generates a transaction request, which comprises data of the requester, the used network component and the requester's digital signature. The server 2 furthermore comprises means for generating and sending a transaction message as a response to said transaction request generated by the terminal device 1.

The system furthermore comprises an adder 4, with which the transaction message is labelled with message-type data and subscriber data.

The adder 4 can be a program block or a program component, which operates in the guidance of the server's mainframe. In this example, the server 2 is a content provider, for instance in the possession and governed by a bank. Furthermore, the data communications network contains a filter 5 for the extraction of message-type data and subscriber data from the transaction message, and also a handling device 6, which is arranged to use the extracted message-type data and subscriber data as handling data for the transaction. Also these devices can be carried out in the telecommunications network as program blocks or program components for instance in the connection of the billing system.

Furthermore, the system illustrated in figure 1 contains a collector 7 for the collection of message type data and subscriber data from each transaction message and for their storage in the billing database. The collector is defined as a component, which receives data of mediated transaction messages from the filter 5 and/or the handling device 6 for billing and for other after processing.

In addition, figure 1 of the system illustrates means 8 for the creation of a data link between said terminal 1 and said server 2. These means can generally mean components needed in a telecommunications network, for instance mobile phone network components, which are used to form a connection between terminal 1 and the server using for instance the WAP-protocol.

Furthermore, the terminal 1 contains registering means 9, with which to register to said server 2 using the terminal user identity and announcing the physical network address, for instance the IP-address of said terminal 1 and/or a third device, illustrated as an example in figure 1 as a PC, to which address the transaction message is subscribed.

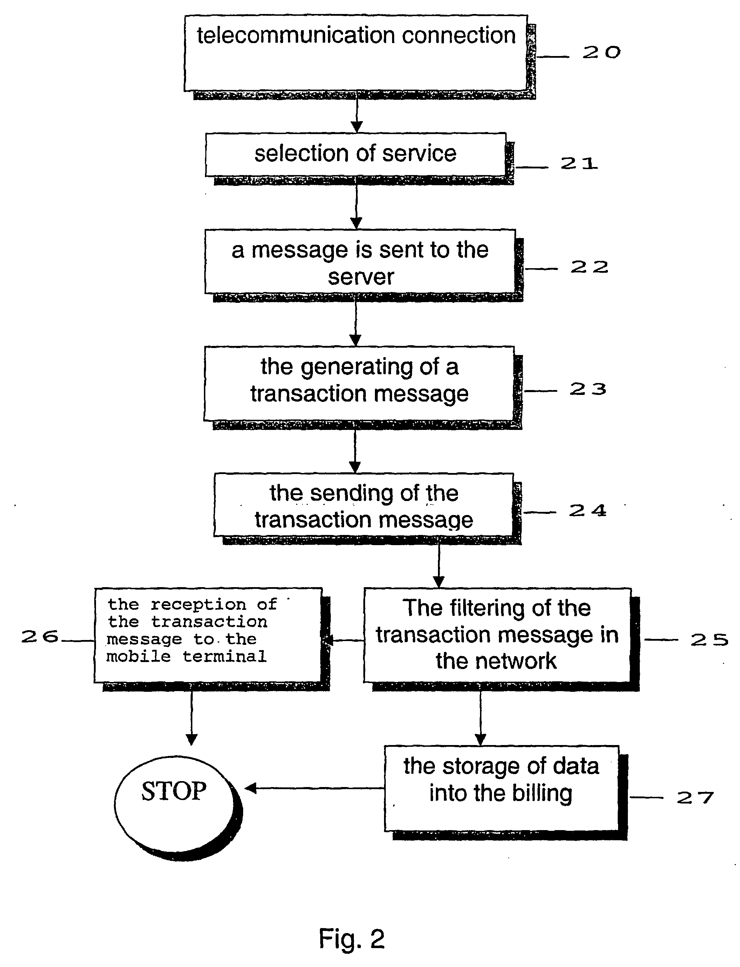

In figure 2, there is illustrated an advantageous flowchart example according method steps of the invention. From the terminal 1, a data link is formed to the server 2, block 20. The data link between the terminal 1 and the server 2 is in this example a connection formed with the WAP-protocol over a mobile phone network. The customer can then choose the desired service from a service menu presented by the server and enter the necessary parameters, i.e. data of the requester, the address of the used network component and the digital signature of the requester, blocks 21 and 22.

The service is for instance the subscription of a bill in the bank or the subscription for a rental video to the set top box of the customer. When necessary, an encryption of the connection can belong to the telecommunications connection. When all the necessary data for the service has been acquired from the terminal, the actual operations the service requires are done, i.e. the generating of the transaction message or messages, which can be several depending on the service, block 23. After the generating of the transaction message it is sent to the network address entered by the terminal, block 24, for instance either to the terminal 1 or the PC in the case of figure 1.

The transaction message is filtered in the data communications network, whereby the data required for the billing and other post handling of the message is collected from the transaction message, block 25. After the filtering, the transaction message is forwarded to the terminal 1, block 26, and the collected data is stored in a billing system or the like, block 27.

Figure 3 illustrates a generalised example of an advantageous transaction message composition of the invention. In the beginning of the message frame, there is an address part, the IP, which indicates the physical network address announced by the terminal. After that, there is a subscriber data part, PIP, which is the subscriber's individual sign or personal IP-address. In some cases these two signes can be the same. The third one is the message-type, MIME, which tells the receiving network component the content of the message, on the basis of which the network component can handle the message, Finally, there is the actual data part, DATA, which can contain the digital signature and which can be encrypted. Otherwise, the content of the data part depends on the service.

The invention is not restricted solely to concern the before mentioned application examples, as many modifications are possible staying within the scope of the appended claims.

## Claims

1. A method for handling transaction data in a telecommunications network, in which method
a transaction request is sent from a requesting terminal (1) to a server (2), which request consists of data of a subscriber associated with said requesting terminal, of a receiving terminal and a digital signature of said subscriber, and
as a response to the mentioned transaction request, a transaction message comprising digital content associated with a requested service is sent from said server to said receiving terminal, said receiving terminal being either said requesting terminal or other terminal,
wherein before being sent
said transaction message is labelled with message-type data and subscriber data for said subscriber, and thereafter
the message-type data and the subscriber data are collected in the data communications network from said transaction message by a filter (5) and that the collected message-type data and the subscriber data for said subscriber are used as handling data for said transaction.

2. A method according to claim 1, **characterized in that** the message-type data and the subscriber data for said subscriber are collected from each transaction message into the billing database.

3. A method according to claim 1, **characterized in that** the message-type data and the subscriber data for said subscriber are attached into the header part of the transaction message.

4. A method according to claim 1, **characterized in that** the method further comprises of the following steps:
forming a data link between said requesting terminal (1) and said server,
logging on to said server (2) using said data link by using a requesting terminal user's identity,
and declaring the physical network address of the receiving terminal, to which said transaction message is subscribed.

5. A method according to claim 1, **characterized in that** the transaction request to be sent from the requesting terminal (1) is encrypted with a service and/or server specific encryption key.

6. A method in accordance with one of the preceding patent claims 1-5 **characterized in that** a confirmation message is sent from the said server (2) to the said requesting terminal (1) as a response to the receiving of the transaction request.

7. A method according to claim 1, **characterized in that** the messages between said requesting terminal (1) and said server (2) are sent as short messages.

8. A method according to claim 4, **characterized in that** the mentioned data link is based on Blue-tooth-technology.

9. A method claim according to 4, **characterized in that** the mentioned data link is an infrared connection.

10. A method according to claim 5, **characterized in that** the public key and secret key encryption method is used for the encryption of the data link.

11. A method according to claim 1, **characterized in that** a connection is formed between the requesting terminal (1) and the server (2) using the WAP-protocol.

12. A method according to claim 1, **characterized in that** the connection between the terminal (1) and the server (2) is formed using the HTML-protocol.

13. A method according to claim 1, **characterized in that** the MIME-message type (Multipurpose Internet Mail Extensions) is used in the message communications between the receiving terminal (1) and the server (2).

14. A system for the handling of transaction data in a telecommunications network, to which system belongs
a server (2),
a requesting terminal (1) for the forming and sending of a transaction request, which comprises data of a subscriber associated with said requesting terminal, data of a receiving terminal and the digital signature of said subscriber, and
in the mentioned server (2) means (3) for the forming and sending of a transaction message comprising digital content associated with a requested service as a response to the said transaction request,
wherein the system furthermore comprises
an adder (4) to label the said transaction message with message-type data and subscriber data for said subscriber, and that
the telecommunications network furthermore contains a filter (5) for the collection of message-type data and subscriber data for said subscriber from the said transaction message, and a handling device (6) which is arranged to use the collected message-type data and the subscriber data for said subscriber as handling data for the transaction.

15. A system according to claim 14, **characterized in that** the system contains a collector (7) for the collection of message-type data and subscriber data for said subscriber and for their storage into the billing database.

16. A system according to claim 14, **characterized in that** the said adder (4) is arranged to attach the mentioned message-type data and the mentioned subscriber data for said subscriber to the headline part of the transaction message.

17. A system according to claim 14, **characterized in that** the system furthermore contains means (8) for the forming of a data link between the mentioned requesting terminal (1) and the mentioned server (2).

18. A system according to claim 14, **characterized in that** the system furthermore contains registration tools (9) in the mentioned requesting terminal (1) which are used to log on to the mentioned server (2) using a requesting terminal user's identity and are used to notify the physical network address of the mentioned receiving terminal to which the mentioned transaction message is subscribed.

## Patentansprüche

1. Verfahren zum Handhaben von Transaktionsdaten in einem Telekommunikationsnetzwerk, wobei bei dem Verfahren eine Transaktionsanforderung von einem anfordernden Endgerät (1) an einen Server (2) gesandt wird, wobei die Anforderung aus Daten eines Teilnehmers, welcher mit dem anfordernden Endgerät verbunden ist, eines Empfangsendgerätes und einer digitalen Signatur des Teilnehmers besteht, und
als Antwort auf die erwähnte Transaktionsanforderung eine Transaktionsnachricht, welche einen digitalen Inhalt aufweist, zusammen mit einem angeforderten Dienst von dem Server an das empfangende Endgerät gesandt wird, wobei das empfangende Endgerät entweder das anfordernde Endgerät oder ein anderes Endgerät ist,
wobei vor dem Senden die Transaktionsnachricht mit Nachrichtentyp-Daten und Teilnehmer-Daten für den Teilnehmer gekennzeichnet ist, und danach
die Nachrichtentyp-Daten und die Teilnehmer-Daten in dem Datenkommunikationsnetzwerk von der Transaktionsnachricht durch ein Filter (5) gesammelt werden und dass die gesammelten Nachrichtentyp-Daten und die Teilnehmer-Daten für den Teilnehmer als Handhabungsdaten für die Transaktion benutzt werden.

2. Verfahren nach Anspruch 1, **dadurch gekennzeichnet, dass** die Nachrichtentyp-Daten und die Teilnehmer-Daten für den Teilnehmer aus jeder Transaktionsnachricht in der Datenbank zur Rechnungsstellung gesammelt werden.

3. Verfahren nach Anspruch 1, **dadurch gekennzeichnet, dass** die Nachrichtentyp-Daten und die Teilnehmer-Daten für den Teilnehmer im Überschriftsteil der Transaktionsnachricht hinzugefügt werden.

4. Verfahren nach Anspruch 1, **dadurch gekennzeichnet, dass** das Verfahren ferner die folgenden Schritte aufweist:
Bilden einer Datenverbindung zwischen dem anfordernden Endgerät (1) und dem Server,
Einloggen in diesen Server (2), wobei die Datenverbindung durch Nutzen der Identität eines anfordernden Endgerätnutzers genutzt wird,
und Angeben der physikalischen Netzwerkadresse des empfangenden Endgerätes, welchem die Transaktionsnachricht zuerkannt ist.

5. Verfahren nach Anspruch 1, **dadurch gekennzeichnet, dass** die Transaktionsanforderung, welche von dem anfordernden Endgerät (1) zu senden ist, mit einem Dienst- und/oder Server-spezifischen Verschlüsselungsschlüssel verschlüsselt ist.

6. Verfahren nach einem der vorangehenden Patentansprüche 1 bis 5, **dadurch gekennzeichnet, dass** eine Bestätigungsnachricht von dem Server (2) an das anfordernde Endgerät (1) als eine Antwort auf das Erhalten der Transaktionsanforderung gesendet wird.

7. Verfahren nach Anspruch 1, **dadurch gekennzeichnet, dass** die Nachrichten zwischen dem anfordernden Endgerät (1) und dem Server (2) als Kurznachrichten gesandt werden.

8. Verfahren nach Anspruch 4, **dadurch gekennzeichnet, dass** die erwähnte Datenverbindung auf Bluetooth-Technologie basiert.

9. Verfahren nach Anspruch 4, **dadurch gekennzeichnet, dass** die erwähnte Datenverbindung eine Infrarotverbindung ist.

10. Verfahren nach Anspruch 5, **dadurch gekennzeichnet, dass** das Public-Key- bzw. Öffentlicher-Schlüssel- und das Secret-Key- bzw. Geheimer-Schlüssel-Verschlüsselungsverfahren zur Verschlüsselung der Datenverbindung benutzt wird.

11. Verfahren nach Anspruch 1, **dadurch gekennzeichnet, dass** eine Verbindung zwischen dem anfordernden Endgerät (1) und dem Server (2) durch Nutzen des WAP-Protokolls gebildet wird.

12. Verfahren nach Anspruch 1, **dadurch gekennzeichnet, dass** die Verbindung zwischen dem Endgerät (1) und dem Server (2) durch Nutzen des HTML-Protokolls gebildet wird.

13. Verfahren nach Anspruch 1, **dadurch gekennzeichnet, dass** der Nachrichtentyp bzw. die Nachrichtenart MIME (Multipurpose Internet Mail Extensions bzw. Mehrzweck-Internet-Mail-Erweiterung) in der Nachrichtenkommunikation zwischen dem empfangenden Endgerät (1) und dem Server (2) benutzt wird.

14. System zum Handhaben der Transaktionsdaten in einem Telekommunikationsnetzwerk, wobei zu dem System gehört:
ein Server (2),
ein anforderndes Endgerät (1) für das Bilden und das Senden einer Transaktionsanforderung, welche Daten eines Teilnehmers, welcher zu dem anfordernden Endgerät gehört, die Daten eines empfangenden Endgerätes und die digitale Signatur des Teilnehmers aufweist, und
eine Vorrichtung (3) in dem erwähnten Server (2) für das Bilden und Senden einer Transaktionsnachricht, welche einen digitalen Inhalt aufweist, welcher zu einem angeforderten Dienst als Antwort auf die Transaktionsanforderung gehört,
wobei das System ferner aufweist:
einen Addierer (4) zum Kennzeichnen der Transaktionsnachricht mit Nachrichtentyp-Daten und Teilnehmer-Daten für den Teilnehmer, und dass
das Telekommunikationsnetzwerk ferner ein Filter (5) zum Sammeln der Nachrichtentyp-Daten und Teilnehmer-Daten für den Teilnehmer von der Transaktionsnachricht und eine Handhabungsvorrichtung (6) beinhaltet, welche angeordnet ist, um die gesammelten Nachrichtentyp-Daten und die Teilnehmer-Daten als Handhabungsdaren für die Transaktion zu nutzen.

15. System nach Anspruch 14, **dadurch gekennzeichnet, dass** das System einen Kollektor (7) zum Sammeln der Nachrichtentyp-Daten und Teilnehmer-Daten für den Teilnehmer und für deren Speicherung in der Datenbank zur Rechnungsstellung beinhaltet.

16. System nach Anspruch 14, **dadurch gekennzeichnet, dass** der Addierer (4) angeordnet ist, um die erwähnten Nachrichtentyp-Daten und die erwähnten Teilnehmer-Daten für den Teilnehmer im Überschriftsteil der Transaktionsnachricht hinzuzufügen.

17. System nach Anspruch 14, **dadurch gekennzeichnet, dass** das System ferner eine Vorrichtung (8) zum Bilden einer Datenverbindung zwischen dem erwähnten anfordernden Endgerät (1) und dem erwähnten Server (2) beinhaltet.

18. System nach Anspruch 14, **dadurch gekennzeichnet, dass** das System ferner Registriereinrichtungen (9) in dem erwähnten anfordernden Endgerät (1) enthält, welche benutzt werden, um sich in dem erwähnten Server (2) einzuloggen, wobei eine Identität des Nutzers des anfordernden Endgerätes benutzt wird, und welche benutzt werden, um die physikalische Netzwerkadresse des erwähnten empfangenden Endgerätes anzuzeigen, welchem die erwähnte Transaktionsnachricht zuerkannt ist.

## Revendications

1. Procédé destiné au traitement de données de transaction dans un réseau de télécommunications, dans lequel
une demande de transaction est envoyée depuis un terminal demandeur (1) à un serveur (2), laquelle demande est constituée de données d'un abonné associé au dit terminal demandeur, d'un terminal récepteur et d'une signature numérique dudit abonné, et
en tant que réponse à la demande de transaction mentionnée, un message de transaction comprenant un contenu numérique associé à un service demandé est envoyé depuis ledit serveur au dit terminal récepteur, ledit terminal récepteur étant soit le terminal demandeur soit un autre terminal,
dans lequel,
avant d'être envoyé, ledit message de message de transaction est étiqueté avec des données de type de message et des données d'abonné pour ledit abonné, et après cela
les données de type de message et les données d'abonné sont collectées dans le réseau de communications de données depuis ledit message de transaction par un filtre (5), et
dans lequel les données de type de message collectées et les données d'abonné pour ledit abonné servent de données de traitement pour ladite transaction.

2. Procédé selon la revendication 1, **caractérisé en ce que** les données de type de message et les données d'abonné pour ledit abonné sont collectées depuis chaque message de transaction dans la base de données de facturation.

3. Procédé selon la revendication 1, **caractérisé en ce que** les données de type de message et les données d'abonné pour ledit abonné sont jointes à la partie entête du message de transaction.

4. Procédé selon la revendication 1, **caractérisé en ce que** le procédé comprend en outre les étapes suivantes consistant à :
établir une liaison de données entre ledit terminal demandeur (1) et ledit serveur,
ouvrir une session sur ledit serveur (2) utilisant ladite liaison de données en utilisant une identité de l'utilisateur du terminal demandeur,
et déclarer l'adresse de réseau physique du terminal récepteur à laquelle ledit message de transaction est souscrit.

5. Procédé selon la revendication 1, **caractérisé en ce que** la demande de transaction devant être envoyée depuis le terminal demandeur (1) est chiffrée avec une clé de chiffrement spécifique au service et/ou au serveur.

6. Procédé selon l'une quelconque des revendications précédentes 1 à 5, **caractérisé en ce qu'**un message de confirmation est envoyé depuis ledit serveur (2) au dit terminal demandeur (1) en tant que réponse à la réception de la demande de transaction.

7. Procédé selon la revendication 1, **caractérisé en ce que** les messages entre ledit terminal demandeur (1) et ledit serveur (2) sont envoyés sous forme de messages courts.

8. Procédé selon la revendication 4, **caractérisé en ce que** la liaison de données mentionnée est basée sur la technologie Blue tooth.

9. Procédé selon la revendication 4, **caractérisé en ce que** la liaison de données mentionnée est une connexion infrarouge.

10. Procédé selon la revendication 5, **caractérisé en ce que** la méthode de chiffrement avec clé publique et clé secrète est utilisée pour le chiffrement de la liaison de données.

11. Procédé selon la revendication 1, **caractérisé en ce qu'**une connexion est établie entre le terminal demandeur (1) et le serveur (2) en utilisant le protocole WAP.

12. Procédé selon la revendication 1, **caractérisé en ce que** la connexion entre le terminal (1) et le serveur (2) est établie en utilisant le protocole HTML.

13. Procédé selon la revendication 1, **caractérisé en ce que** le type de message MIME (Multipurpose Internet Mail Extensions) est utilisé dans les communications de message entre le terminal récepteur (1) et le serveur (2).

14. Système pour le traitement de données de transaction dans un réseau de télécommunications, auquel système appartiennent
un serveur (2),
un terminal demandeur (1) destiné à former et envoyer une demande de transaction, qui comprend des données d'un abonné associé audit terminal demandeur, des données d'un terminal récepteur et la signature numérique dudit abonné, et
dans le serveur mentionné (2) des moyens (3) destinés à former et envoyer un message de transaction comprenant un contenu numérique associé à un service demandé en réponse à ladite demande de transaction,
dans lequel le système comprend en outre
un additionneur (4) pour étiqueter ledit message de transaction avec des données de type de message et des données d'abonné pour ledit abonné, et
dans lequel le réseau de télécommunications contient en outre un filtre (5) destiné à la collecte de données de type de message et de données d'abonné pour ledit abonné depuis ledit message de transaction, et un dispositif de traitement (6) qui est disposé afin d'utiliser les données de type de message collectées et les données d'abonné pour ledit abonné en tant que données de traitement pour la transaction.

15. Système selon la revendication 14, **caractérisé en ce que** le système contient un collecteur (7) destiné à la collecte de données de type de message et de données d'abonné pour ledit abonné et destiné à leur stockage dans la base de données de facturation.

16. Système selon la revendication 14, **caractérisé en ce que** ledit additionneur (4) est disposé pour joindre les données de type de message mentionnées et les données d'abonné mentionnées pour ledit abonné à la partie de ligne d'en-tête du message de transaction.

17. Système selon la revendication 14, **caractérisé en ce que** le système contient en outre des moyens (8) destinés à l'établissement d'une liaison de données entre le terminal demandeur mentionné (1) et le serveur mentionné (2).

18. Système selon la revendication 14, **caractérisé en ce que** le système contient en outre des outils d'inscription (9) dans le terminal demandeur mentionné (1) qui sont utilisés pour ouvrir une session sur le serveur mentionné (2) en utilisant une identité de l'utilisateur du terminal demandeur et qui sont utilisés pour notifier l'adresse de réseau physique au terminal récepteur mentionné auquel le message de transaction mentionné est souscrit.
